# FASCICULE DE BREVET EUROPEEN

(11) **EP 0 660 087 B1**
(45) Date de publication et mention de la délivrance du brevet: **02.02.2000**
(21) Numéro de dépôt: 94402703.6
(22) Date de dépôt: 25.11.1994
(51) Int. Cl.: G01D 5/34, G01D 5/26

(54) **Capteur polarimétrique de déplacement angulaire à fibre optique et procédé de mesure associé**
Fiberoptischer polarimetrischer Verschiebungssensor und assoziiertes Messverfahren
Fiberoptic polarimetric displacement sensor and associated measurement procedure

(30) Priorité: 20.12.1993 FR 9315289
(43) Date de publication de la demande: 28.06.1995
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Clement, Michel, F-27200 Vernon (FR); Mancier, Nathalie, F-67100 Strasbourg (FR); Chakari, Ayoud, F-67000 Strasbourg (FR); Meyrueis, Patrick, F-67000 Strasbourg (FR)
(74) Mandataire: Thévenet, Jean-Bruno

(56) Documents cités:
- EP-A- 0 152 706
- JOURNAL OF LIGHTWAVE TECHNOLOGY LT-5, no.7, Juillet 1987, NEW YORK, NY, USA pages 916 - 919 K. ITOH, T. SAITOH, Y. OHTSUKA. 'Optical Rotation Sensing by the Geometric Effect of Fiber-Loop Twisting.'

## Description

### Domaine de la technique

La présente invention concerne un capteur de déplacement angulaire à fibre optique de type intrinsèque destiné à être mis en oeuvre dans un environnement cryogénique et de vibrations mécaniques sévères et dont le principe d'utilisation repose sur le changement d'état de polarisation de la lumière dans une fibre optique sous l'effet d'une contrainte appliquée à une portion de cette fibre. Elle concerne également le procédé de mesure associé.

### Art antérieur

Les méthodes de mesure de position actuellement utilisées pour les dispositifs fonctionnant en ambiance cryogénique comme des vannes à boisseau, font appel principalement à des capteurs potentiométriques. Toutefois, compte tenu des températures de fonctionnement des vannes à fluide cryogénique, ces capteurs sont nécessairement éloignés du boisseau par l'intermédiaire d'arbres et d'accouplements multiples dont les nombreux jeux ont alors pour effet d'entraîner des imprécisions sur les mesures.

Une solution envisagée pour s'affranchir de ces jeux consisterait à effectuer une mesure de la position de la vanne en direct, par exemple par l'intermédiaire d'un codeur optique. Le problème posé par le recours à de tels codeurs est toutefois que, dans un environnement cryogénique, la présence de bulles dans le fluide retire toute fiabilité à ces capteurs, en particulier pour des petits diamètres.

Une méthode de mesure reposant sur la rotation de la polarisation dans une fibre optique par effet géométrique est aussi proposée par K. Itoh et al dans un article du Journal of lightwave Technology (vol. LT-5 N°7, juillet 87).

Il est connu également que l'application d'une contrainte à une fibre optique induit une biréfringence dans cette fibre. Cette propriété particulière peut être utilisée pour la mesure de différentes grandeurs et notamment de déplacements linéaires comme le montre par exemple la demande de brevet EP 0 338 537. Toutefois, les capteurs de ce type, développés actuellement, reposent essentiellement sur l'application à la fibre optique d'une force dont la génération se révèle inadaptée en ambiance cryogénique.

### Description de l'invention

La présente invention se propose donc de réaliser un capteur de déplacement angulaire particulièrement fiable, peu sensible aux perturbations externes et capable de supporter une immersion dans un fluide cryogénique.

Un but de l'invention est de réaliser un capteur ayant une structure simple, c'est à dire faisant le plus possible appel à des composants standards peu coûteux, et nécessitant un encombrement réduit, tout en autorisant une mesure en prise directe avec le déplacement à mesurer. Un autre but de l'invention est de réaliser un capteur permettant une précision meilleure que le dixième de degré sur au moins 100° de déplacement.

Ces buts sont atteints par un capteur polarimétrique à fibre optique permettant la mesure d'un déplacement angulaire d'un objet par rapport à un bâti et comportant des moyens d'émission de la lumière à une extrémité de la fibre optique selon une polarisation linéaire, des moyens de détection et de mesure à une autre extrémité de cette fibre de la modification de la polarisation entraînée par une contrainte exercée sur cette fibre, et des moyens de détermination du déplacement angulaire de l'objet par analyse de la polarisation ainsi obtenue, la fibre optique étant, sur une fraction de sa longueur, à la fois solidaire de l'objet en un point central (O) et solidaire du bâti en des premier (A) et second (B) points fixes disposés de part et d'autre du point central, et la contrainte est constituée par une torsion de la fibre entre les deux points fixes, cette torsion résultant de la rotation de l'objet.

Le recours à une fibre optique à la fois comme élément capteur et transmetteur de l'information permet d'obtenir une structure de capteur simple, performante et résistante, en prise directe avec l'objet dont on désire mesurer le déplacement.

La fibre optique est solidarisée de l'objet (en O) et du bâti (en A et B) au moyen d'une colle. Cette solution évite le recours à des dispositifs de fixation mécaniques qui en exercant des contraintes sur la fibre aurait pour effet de modifier la biréfringence dans la fibre.

De préférence, afin d'améliorer la maniabilité du capteur, la fibre optique forme, au point central O, une boucle fermée d'un diamètre déterminé de manière à ne pas introduire de biréfringence linéaire sur le trajet de la lumière.

La fibre optique est une fibre standard de type télécommunication monomode qui permet une excellente précision ou multimode moins précise mais beaucoup moins chère.

Les différentes caractéristiques précédentes sont particulièrement adaptées à la mise en oeuvre d'un tel capteur polarimétrique de déplacement angulaire à fibre optique pour la mesure de la rotation de vanne à fluide cryogénique fonctionnant sous des pressions élevées.

### Brève description des dessins

D'autres caractéristiques et avantages de la présente invention ressortiront mieux de la description suivante, faite à titre indicatif et non limitatif, en regard des dessins annexés, sur lesquels :
- la figure 1 montre un schéma de principe du capteur de déplacement angulaire selon l'invention,
- la figure 2 est un exemple de montage du capteur de la figure 1 au niveau d'une vanne à boisseau d'un générateur cryogénique,
- la figure 3 est une vue d'un détail de la figure 2, et
- la figure 4 est un graphique montrant la variation de la position angulaire de l'objet en rotation en fonction de la puissance recueillie en sortie du capteur.

### Description d'un mode de réalisation préférentiel de l'invention

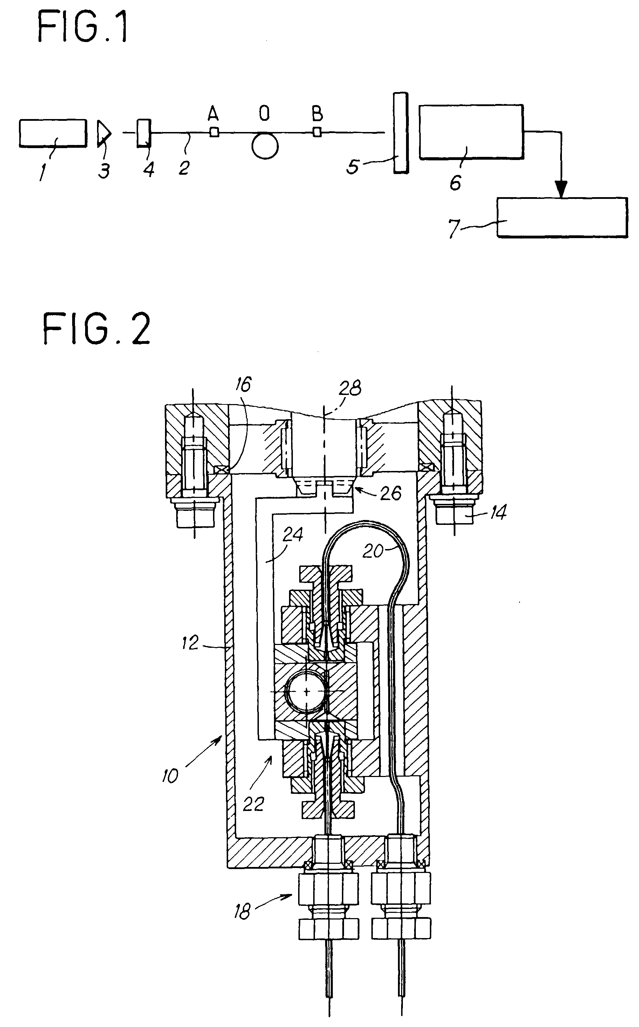

La figure 1 est un schéma de principe d'un capteur de position angulaire selon l'invention. La lumière d'une source laser telle qu'une diode laser polarisée linéairement 1 est injectée dans une fibre optique standard de type télécommunication 2, monomode ou multimode, au travers de moyens de focalisation de structure connue comme des lentilles 3. Eventuellement, si la fibre utilisée ne présente pas un taux de polarisation suffisamment élevé, il est possible d'utiliser un contrôleur de polarisation ou polariseur 4 placé sur la fibre immédiatement après l'injection et qui aura pour effet d'orienter le plan de polarisation dans une direction déterminée optimale pour la mesure. De préférence, un tel contrôleur est formé soit de deux mâchoires qui pressent la fibre avec une force déterminée soit plus simplement de deux boucles orientables ayant des rayons de courbure déterminés (l'orientation ayant pour objet de modifier le plan de polarisation initial). La fibre optique 2 est d'une part fixée en un point central O sur l'objet en rotation et d'autre part en deux points fixes A, B solidaires d'un bâti immobile. La rotation de l'objet par rapport au bâti et donc du point central O par rapport aux premier et second points fixes A, B provoque une torsion de la portion de la fibre comprise entre A et B qui entraîne une rotation du plan de polarisation de la lumière dans la fibre et permet ainsi, par l'utilisation d'un analyseur de polarisation ou polariseur 5 placé en sortie de fibre et suivi d'un détecteur, par exemple une photodiode à semiconducteur 6, une mesure de l'intensité de lumière en sortie de fibre. Un circuit de traitement du signal 7 disposé en sortie du photodétecteur 6 permet un enregistrement des différentes valeurs d'intensité lumineuse recueillies et une comparaison de ces valeurs avec des valeurs préétablies donne alors très simplement le déplacement angulaire de l'objet par rapport au bâti. De préférence, ce circuit de traitement permet également de mettre en oeuvre des filtrages simples pour augmenter le rapport signal sur bruit des signaux recueillis.

Dans ce dispositif, la fibre optique sert à la fois d'élément capteur et de transmetteur de l'information. Classiquement, un capteur polarimétrique à fibre optique opère selon le principe suivant: Dans une fibre monomode, il existe deux mode de propagation orthogonaux HE₁₁ (x) et HE₁₁ (y) suivants les axes X et Y principaux de la fibre. A chacun de ces modes est associée une constante de propagation, β(x), β(y) respectivement, à partir de laquelle il peut être déterminé la biréfringence linéaire Δn: Δn=((β(x)-β(y))/k avec k=2π/λ et λ étant la longueur d'onde de la lumière émise (en m).

Cette biréfringence peut être modifiée par des contraintes extérieures appliquées à la fibre, notamment une pression ou une courbure de la fibre, qui provoquent un effet de biréfringence linéaire, c'est à dire qu'elles modifient l'état de polarisation le long de la fibre.

Dans la présente invention, au contraire, il est fait appel à la biréfringence circulaire induite par une torsion de la fibre qui provoque une rotation du plan de polarisation, sans changement de l'état de polarisation de la lumière. Ainsi, une polarisation linéaire reste linéaire sous l'effet d'une torsion mais sa direction tourne le long de la fibre, c'est à dire qu'il se produit une rotation du plan de polarisation de la lumière dans la fibre. La biréfringence circulaire est calculée à l'aide de l'équation suivante: Δn=g∗τ, τ étant le taux de torsion (en rad/m) et g un coefficient compris entre 0.14 et 0.16 pour la silice constituant habituellement les fibres optiques classiques.

Dans un mode préférentiel de réalisation de l'invention, la liaison ponctuelle de la fibre avec l'objet au point central O est remplacée par liaison plane par l'intermédiaire d'une boucle fermée, d'un maniement plus aisé et dont le rayon de courbure est déterminé précisément pour ne pas introduire une composante de biréfringence linéaire dans le capteur. On vérifie pour cela que l'état de polarisation est identique en entrée et en sortie de cette boucle.

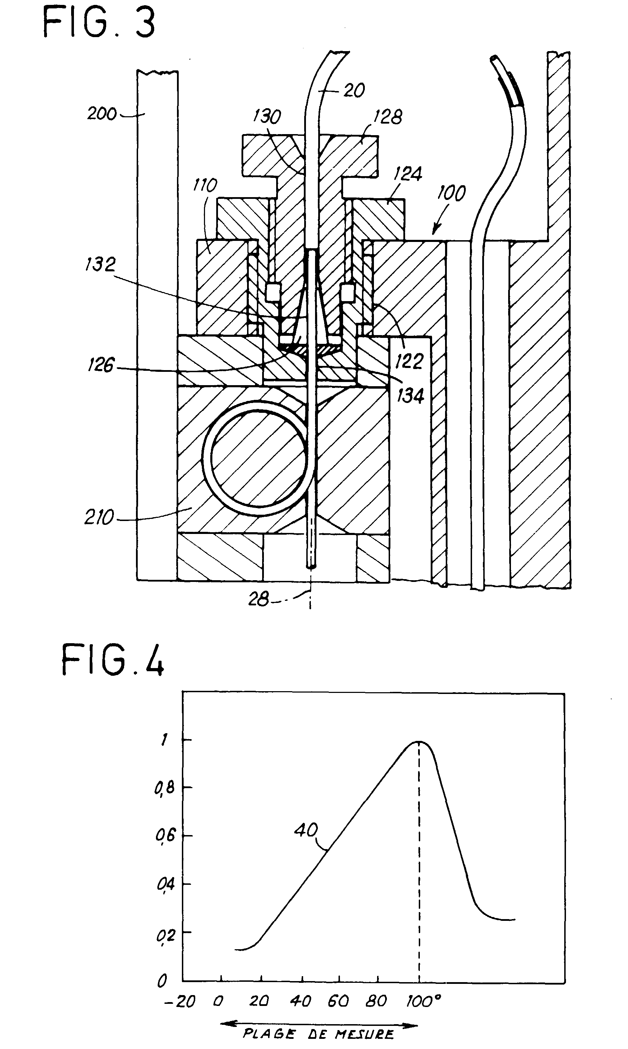

Les figures 2 et 3 montrent un exemple de réalisation d'un capteur de déplacement angulaire d'une vanne à fluide cryogénique. Un ensemble de mesure 10 est fixé sur un bâti 12 de la vanne par des moyens de fixation 14, écrasant un joint d'étanchéité 16 et formant ainsi un bloc étanche dans lequel peut circuler, à l'état liquide ou gazeux, le fluide cryogénique. Des passages étanches 18 pratiqués dans ce boîtier 10 qui comprend une fibre optique de mesure 20 ainsi que son support 22 définissent des points d'entrée et de sortie de cette fibre. Le support de la fibre est constitué d'une partie fixe solidaire du boîtier (qui peut comme dans l'exemple représenté être une partie de ce boîtier) et d'une partie mobile 24 articulée dans cette partie fixe et reliée à l'arbre du boisseau de la vanne par des moyens de liaison quelconques 26, par exemple un encliquetage. L'articulation des parties fixe et mobile entres elles est effectuée autour d'un axe commun 28 qui est aussi l'axe de l'arbre dont la rotation est à déterminer.

La partie fixe présente une forme de chape 100 avec une oreille supérieure 110 et une oreille inférieure 120 entre lesquelles la partie mobile 24 peut pivoter selon l'axe 28. Les deux oreilles sont chacune percées de part en part (selon l'axe 28) d'un orifice cylindrique 122 taraudé pour recevoir une pièce intermédiaire 124 filetée extérieurement et s'étendant à l'intérieur de la chape pour constituer l'axe d'articulation de la partie mobile 24. Chaque pièce intermédiaire 124 présente une cavité interne taraudée sur une partie de sa profondeur et au fond de laquelle vient se placer une pièce 126 assurant le serrage de la fibre en coopération avec une pièce de maintien 128 de la fibre optique 20 vissée dans la cavité interne de la pièce intermédiaire. La fibre optique traverse chacune de ces différentes pièces, 124, 126, 128, grâce à des canaux pratiqués dans chacune d'elles au niveau de leur axe de rotation. Ainsi, la pièce de maintien est traversée par un canal 130, la pièce de serrage par un canal 132 et la pièce intermédiaire par un canal 134 percé dans le fond de sa cavité interne.

La partie mobile 24 comporte un bras 200 dont une première extrémité est munie des moyens de liaison 26 avec l'arbre du boisseau de la vanne et une seconde extrémité comporte un dispositif 210 destiné à recevoir la partie active du capteur, c'est à dire la boucle de mesure. Dans un exemple de réalisation préférentiel, ce dispositif est constitué par un ensemble en polymère, par exemple deux blocs de téflon solidaires l'un de l'autre, l'un de ces deux blocs contenant une saignée destinée à recevoir la fibre. Ainsi, la fibre est à la fois maintenue parfaitement fixe et protégée des perturbations mécaniques environnantes. De plus les risques de glissement ou de décollement de la fibre sont minimisés. Il est à noter qu'une solution reposant sur un collage de la fibre sur l'extrémité du bras 200 est aussi envisageable, cette colle devant bien entendue être compatible avec l'ambiance dans laquelle est placé le capteur (par exemple le recours à des colles organiques ne peut être envisagé en ambiance cryogénique).

Le fonctionnement du capteur polarimétrique selon l'invention est le suivant. Le capteur étant fixé en trois points A, O, B, la rotation du boisseau de la vanne autour de l'axe 28 provoque une rotation du bras 200 supportant le dispositif de maintien 210 et donc une rotation du point central O, ce qui provoque une torsion d'une portion de la fibre entre les points fixes A et B. La distance entre les deux points A et B est réglable par la pièce intermédiaire 124 qui peut être plus ou moins enfoncée dans l'oreille 110 de la chape 100, la fibre étant ensuite maintenue fixe par la coopération entre les pièces de maintien 128 et de serrage 126. Il peut être noté que la fibre doit être maintenue de telle façon que les parties OA et OB soient tendues. Pour ne pas provoquer de biréfringence supplémentaire en dehors de la zone active du capteur (entre A et B), le rayon de courbure de la boucle d'entrée et de la boucle de retour (dans l'exemple représenté, seule est présente une boucle de retour) doit être tel que la biréfringence ainsi induite soit négligeable devant celle créée par la torsion de la fibre.

Les fibres optiques utilisées ont de préférence le coeur et la gaine en silice et correspondent aux fibres de télécommunication standards, monomode ou multimode. Cette constitution en un seul matériau est importante afin d'éviter les microfissures ou les cassures qui pourraient être dues à des taux de contraction différents résultant des variations de température. Il est également important de noter que la partie active du capteur fait partie intégrante de la fibre qui peut présenter une très grande longueur (plusieurs dizaines de mètres), afin de relier la source de lumière 1 au détecteur 6.

Dans le cas d'une utilisation d'une fibre monomode, la source de lumière (émettant de préférence dans le rouge ou l'infrarouge) sera constituée par un laser du type Hélium-Néon polarisé ou encore par une source laser fibrée à guidage par l'indice et à haut taux de polarisation, ce qui présente l'avantage de stabiliser parfaitement l'injection.

Par contre, avec une fibre multimode, la source de lumière peut être constituée simplement par une diode électroluminescente, cette moindre sophistication de la source de lumière permettant une réduction notable du coût global du dispositif. Il est alors préférable de prévoir un filtrage modal supplémentaire afin de limiter la dispersion de polarisation introduite par ce type de fibre dont les performances restent toutefois légèrement moins bonnes que celles des fibres monomode.

Quelle que soit la solution retenue, il est nécessaire que la source de lumière utilisée soit polarisée linéairement afin d'être dans les conditions optimales de détection de la rotation du plan de polarisation. Les polariseurs ne laissant passer la lumière que dans une direction de polarisation, une rotation du plan de polarisation due à la torsion de la fibre va entraîner une variation de l'intensité mesurée au niveau du détecteur, comme le montre la figure 4 qui représente, pour une fibre monomode et dans la configuration de la figure 2, la variation de la puissance de sortie normalisée (par rapport à la puissance maximale détectée) en fonction de la position angulaire de l'objet en rotation. Il peut être observé une plage de mesure linéaire s'étendant sur 100 degrés et dans laquelle la précision de mesure obtenue est de 0.1 degré.

Les performances précitées ainsi que la sécurité avec laquelle elles sont obtenues rendent le capteur de l'invention particulièrement interessant, notamment dans un environnement cryogénique. Il présente en outre un faible encombrement et sa position au plus près de l'objet dont le déplacement est mesuré réduit considérablement les vibrations ou les jeux présents dans les dispositifs de l'art antérieur. Ce capteur est d'une très grande fiabilité car il est totalement insensible aux perturbations électromagnétiques et très peu sensible aux autres sources de perturbation de la mesure. De plus, la fixation de la partie active du capteur dans un bloc de polymère à pour effet de supprimer tout phénomène d'hystérésis et donc de permettre une parfaite reproductibilité de la mesure tout en lui garantissant une excellente résistance mécanique. Bien évidemment, la plage de mesure n'est pas limitée à 100 degrés comme dans l'exemple de la figure 2, mais elle peut s'étendre sur 360 degrés, sous réserve d'un étalonnage préalable plus complexe, la nécessaire adaptation du support de la fibre à ce débattement plus large étant à la portée de l'homme de l'art. On peut noter par ailleurs noter que la structure simple du capteur selon l'invention autorise son démontage rapide sans nécessiter un remplacement de l'actionneur sur lequel il est fixé.

## Revendications

1. Procédé de mesure du déplacement angulaire par effet de biréfringence circulaire d'un objet en rotation par rapport à un bâti à partir d'une fibre optique (2,20), caractérisé en ce que cette fibre étant à la fois solidaire de l'objet en un point central (O) et solidaire du bâti en des premier (A) et second (B) points fixes disposés de part et d'autre du point central, il comporte les étapes suivantes:
a) injection d'une lumière polarisée linéairement à une extrémité de la fibre optique,
b) mesure de la rotation du plan de polarisation induite à l'autre extrémité de la fibre par la torsion d'une portion active de cette fibre résultant de la rotation de l'objet, et
c) détermination du déplacement angulaire de l'objet par comparaison de l'orientation de la polarisation ainsi obtenue avec des valeurs d'orientation préétablies correspondant à des déplacements prédéterminés.

2. Procédé selon la revendication 1, caractérisé en ce qu'il comporte après l'étape a) d'injection une étape supplémentaire de contrôle de la polarisation de la lumière dans la fibre optique destinée à orienter le plan de polarisation dans une direction déterminée, optimale pour la mesure.

3. Procédé selon la revendication 1 ou la revendication 2, caractérisé en ce que la fibre optique utilisée pour la mesure est une fibre optique standard, monomode ou multimode, de type télécommunication.

4. Capteur polarimétrique à fibre optique pour la mesure d'un déplacement angulaire par effet de biréfringence circulaire d'un objet par rapport à un bâti, comportant des moyens d'émission de la lumière (1,3) à une extrémité de la fibre optique (2) selon une polarisation linéaire, des moyens de détection et de mesure (5,6) à une autre extrémité de cette fibre, de la modification de l'orientation de la polarisation entraînée par une contrainte exercée sur cette fibre, et des moyens de détermination du déplacement angulaire de l'objet (7) par analyse de la polarisation ainsi obtenue, caractérisé en ce que la fibre optique est, sur une portion active de sa longueur, à la fois solidaire de l'objet en un point central (O) et solidaire du bâti en des premier (A) et second (B) points fixes disposés de part et d'autre du point central, et en ce que cette contrainte est constituée par une torsion de la fibre, entre lesdits deux points fixes, résultant de la rotation de l'objet.

5. Capteur selon la revendication 4, caractérisé en ce que la portion active de la fibre optique est solidarisée de l'objet (en O) et du bâti (en A et B) au moyen d'une colle.

6. Capteur selon la revendication 4, caractérisé en ce que la portion active de la fibre optique est incrustée dans un bloc de polymère.

7. Capteur selon la revendication 4, caractérisé en ce que la fibre optique forme, au point central O, une boucle fermée d'un diamètre déterminé de manière à ne pas introduire de biréfringence linéaire sur le trajet de la lumière.

8. Capteur selon la revendication 4, caractérisé en ce que les portions non actives de la fibre optique sont disposées de façon à ne pas introduire de biréfringence linéaire dans le trajet de la lumière.

9. Capteur selon l'une quelconque des revendications 4 à 8, caractérisé en ce que la fibre optique est une fibre standard de type télécommunication monomode ou multimode.

10. Application du procédé de mesure de déplacement angulaire par effet de biréfringence circulaire selon l'une quelconque des revendications 1 à 3, à la mesure de la rotation d'une vanne à fluide cryogénique soumise à des pressions élevées.

## Claims

1. Procedure for measuring the angular displacement by circular birefringence effect of an object rotating with respect to a rig on the basis of an optical fibre (2, 20), characterized in that this fibre being both secured to the object at a central point (O) and secured to the rig at first (A) and second (B) fixed points disposed on either side of the central point, it comprises the following steps:
a) injection of a linearly polarized light at one end of the optical fibre,
b) measurement of the rotation of the plane of polarization induced at the other end of the fibre by the torsion of an active portion of this fibre resulting from the rotation of the object, and
c) determination of the angular displacement of the object by comparing the orientation of the polarization thus obtained with preestablished values of orientation corresponding to predetermined displacements.

2. Procedure according to Claim 1, characterized in that it comprises after the injection step a) an additional step of control of the polarization of the light in the optical fibre intended to orient the plane of polarization in a determined direction, which is optimal for the measurement.

3. Procedure according to Claim 1 or Claim 2, characterized in that the optical fibre used for the measurement is a standard optical fibre, single-mode or multimode, of telecommunication type.

4. Fibre optic polarimetric sensor for the measurement of an angular displacement by circular birefringence effect of an object with respect to a rig, comprising means of emission of light (1, 3) at one end of the optical fibre (2) according to a linear polarization, means of detection and measurement (5, 6) at another end of this fibre, of the modification of the orientation of the polarization engendered by a constraint exerted on this fibre, and means for determination of the angular displacement of the object (7) by analysing the polarization thus obtained, characterized in that the optical fibre is, over an active portion of its length, both secured to the object at a central point (O) and secured to the rig at first (A) and second (B) fixed points disposed on either side of the central point, and in that this constraint is constituted by a torsion of the fibre, between the said two fixed points, resulting from the rotation of the object.

5. Sensor according to Claim 4, characterized in that the active portion of the optical fibre is secured to the object (at O) and to the rig (at A and B) by means of a glue.

6. Sensor according to Claim 4, characterized in that the active portion of the optical fibre is inset into a block of polymer.

7. Sensor according to Claim 4, characterized in that the optical fibre forms, at the central point O, a closed loop of a diameter determined in such a way as not to introduce linear birefringence into the path of the light.

8. Sensor according to Claim 4, characterized in that the non-active portions of the optical fibre are disposed in such a way as not to introduce linear birefringence within the path of the light.

9. Sensor according to any one of Claims 4 to 8, characterized in that the optical fibre is a standard fibre of single-mode or multimode telecommunication type.

10. Applications of the procedure for measuring angular displacement by circular birefringence effect according to any one of Claims 1 to 3, to the measurement of the rotation of a cryogenic fluid valve subjected to high pressures.

## Patentansprüche

1. Verfahren zum Messen der Winkelverschiebung durch den Effekt der zirkularen Doppelbrechung eines Gegenstandes, der sich in Bezug auf einen Rahmen dreht, ausgehend von einer optischen Faser (2, 20),
dadurch **gekennzeichnet**, daß diese Faser gleichzeitig mit dem Gegenstand in einem mittleren Punkt (O) und mit dem Rahmen in ersten (A) und zweiten (B) Fixpunkten fest verbunden ist, die auf beiden Seiten des mittleren Punktes liegen, mit den folgenden Schritten:
a) Einstrahlen von linear polarisiertem Licht an einem Ende der optische Faser;
b) Messen der Drehung der Polarisationsebene, die sich am anderen Ende der Faser aufgrund der von der Drehung des Gegenstandes bedingten Torsion eines aktiven Abschnittes dieser Faser ergibt, und
c) Bestimmen der Winkelverschiebung des Gegenstandes durch den Vergleich der Richtung der so erhaltenen Polarisation mit den voreingestellten Richtungswerten, die vorbestimmten Verschiebungen entsprechen.

2. Verfahren nach Anspruch 1,
dadurch **gekennzeichnet**, daß nach dem Schritt a) der Einstrahlung ein zusätzlicher Schritt für die Steuerung der Polarisation des Lichtes in der optischen Faser erfolgt, um die Polarisationsebene in eine vorbestimmte und für die Messung optimale Richtung auszurichten.

3. Verfahren nach einem der Ansprüche 1 oder 2,
dadurch **gekennzeichnet**, daß die für die Messung verwendete optische Faser eine optische Monomoden- oder Multimoden-Telekommunikationsfaser ist.

4. Polarimetrischer Sensor mit optischer Faser für die Messung einer Winkelverschiebung durch den Effekt der zirkularen Doppelbrechung eines Gegenstandes gegenüber einem Rahmen, mit einer Einrichtung zur Emission von Licht (1, 3) an einem Ende der optischen Faser (2) mit linearer Polarisation, einer Detektions- und Meßeinrichtung (5, 6) an einem anderen Ende der Faser, einer Einrichtung für die Änderung der Richtung der Polarisation, die auf einer auf die Faser ausgeübte Beanspruchung beruht, und einer Einrichtung zur Bestimmung der Winkelverschiebung des Gegenstandes (7) durch die Analyse der dadurch erhaltenen Polarisation,
dadurch **gekennzeichnet**, daß die optische Faser in einem aktiven Abschnitt ihrer Länge gleichzeitig fest mit dem Gegenstand in einem mittleren Punkt (O) und mit dem Rahmen in ersten (A) und zweiten (B) Fixpunkten verbunden ist, die auf der einen und auf der anderen Seite des mittleren Punktes liegen, und daß sich diese Beanspruchung durch eine Torsion der Faser zwischen den beiden Fixpunkten aufgrund der Drehung des Gegenstandes ergibt.

5. Sensor nach Anspruch 4,
dadurch **gekennzeichnet**, daß der aktive Bereich der optischen Faser mit dem Gegenstand (in O) und mit dem Rahmen (in A und B) mit Klebstoff fest verbunden ist.

6. Sensor nach Anspruch 4,
dadurch **gekennzeichnet**, daß der aktive Bereich der optischen Faser in einen Polymerblock eingelegt ist.

7. Sensor nach Anspruch 4,
dadurch **gekennzeichnet**, daß die optische Faser im mittleren Punkt (O) eine geschlossene Schleife mit einem Durchmesser bildet, der so bestimmt ist, daß beim Durchgang des Lichtes keine lineare Doppelbrechung erfolgt.

8. Sensor nach Anspruch 4,
dadurch **gekennzeichnet**, daß die nicht aktiven Bereiche der Faser so angeordnet sind, daß beim Durchgang des Lichtes keine lineare Doppelbrechung erfolgt.

9. Sensor nach einem der Ansprüche 4 bis 8,
dadurch **gekennzeichnet**, daß die optische Faser eine Monomoden- oder Multimoden-Standardtelekommunikationsfaser ist.

10. Verwendung des Verfahrens zum Messen der Winkelverschiebung durch den Effekt der zirkularen Doppelbrechung nach einem der Ansprüche 1 bis 3, für die Messung der Drehung eines Ventils mit cryogener Flüssigkeit, das erhöhten Drücken ausgesetzt ist.
